# EUROPÄISCHE PATENTSCHRIFT

(11) **EP 3 128 294 B1**
(45) Veröffentlichungstag und Bekanntmachung des Hinweises auf die Patenterteilung: **30.12.2020**
(21) Anmeldenummer: 16183081.5
(22) Anmeldetag: 05.08.2016
(51) Int. Cl.: G01D 5/14, G01D 5/245

(54) **SENSOR ZUR BESTIMMUNG DER WINKELPOSITION EINES MOTORS SOWIE EIN MOTOR MIT EINEM SENSOR ZUR BESTIMMUNG DER WINKELPOSITION**
SENSOR FOR DETERMINING THE ANGULAR POSITION OF A MOTOR, AND A MOTOR HAVING A SENSOR FOR DETERMINING THE ANGULAR POSITION
CAPTEUR DE DETERMINATION DE LA POSITION ANGULAIRE D'UN MOTEUR ET MOTEUR COMPRENANT UN CAPTEUR DESTINE A DETERMINER LA POSITION ANGULAIRE

(30) Priorität: 07.08.2015 DE 102015215154
(43) Veröffentlichungstag der Anmeldung: 08.02.2017
(73) Patentinhaber: Deutsches Zentrum für Luft- und Raumfahrt e.V., 51147 Köln (DE)
(72) Erfinder: Wedler, Armin, 80636 München (DE); Buhren, David, 35390 Gießen (DE); Reill, Josef, 86916 Kaufering (DE); Senft, Volker, 82229 Seefeld (DE)
(74) Vertreter: dompatent von Kreisler Selting Werner - Partnerschaft von Patent- und Rechtsanwälten mbB

(56) Entgegenhaltungen:
- EP-A1- 0 111 443
- CN-Y- 2 146 813
- DE-A1- 10 060 287
- DE-A1- 19 818 799
- US-A- 5 969 496
- US-A1- 2008 061 724
- US-A1- 2014 028 294

## Beschreibung

Die vorliegende Erfindung betrifft einen Sensor mit einem Maßkörper, insbesondere einem Noniussystem zur Bestimmung der Winkelposition eines Motors. Darüber hinaus betrifft die vorliegende Erfindung einen Motor mit einem erfindungsgemäßen Sensor.

Antriebe haben in der heutigen Robotik, aber auch in der allgemeinen Automatisierungstechnik, einen entscheidenden Anteil bzw. stellen eine Kernkomponente vieler Aktuatoren dar. Eine technische Aufgabe beim Einsatz solcher Antriebe ist die Messung der Rotorposition des Motors. Anhand der Rotorposition kann auf die Rotorgeschwindigkeit, sowie auf die Beschleunigung bzw. die Abbremsung des Rotors geschlossen werden. Eine möglichst genaue Bestimmung der Rotorposition ist deshalb wünschenswert. Dabei wird unterschieden, ob der Winkel der Rotorposition absolut oder relativ erfasst wird. In der Vergangenheit haben sich bereits Sensoren bewährt, die auf dem sogenannten MR-Effekt (Magnetoresistiver Effekt) beruhen. Ein MR-Sensor verändert seinen Widerstand in Abhängigkeit der Orientierung zwischen Stromrichtung und magnetischer Feldrichtung. Eine Veränderung der Position der magnetischen Feldlinien führt also zu einem veränderten Widerstandswert. Bzw. erlaubt der aktuelle Widerstand die Bestimmung der derzeitigen Orientierung der magnetischen Feldlinien und damit eine Messung der Position. Typischerweise werden mehrere veränderbare Widerstände in einer Brückenschaltung angeordnet, um nichtlineare Effekte zu kompensieren.

Eine übliche Vorgehensweise ist es, einen Ferritring als Maßkörper zu magnetisieren. Üblicherweise werden die Segmente dieser Ringe mit abwechselnder Folge "alternierend" mit Nord- bzw. Südpol beschrieben. Der Ferritring wird am Rotor des Motors angebracht und an einem feststehenden MR-Sensor vorbeigeführt. Durch eine höhere Anzahl von Polpaaren wird die Auflösung der Rotorposition vervielfacht (relativer Winkel, ausgehend von einer beliebigen Startposition).

Das Ferritmaterial der Magnetringe ist spröde und schwer zu verarbeiten. Bei extremen Anwendungen, wie z.B. im Weltraum sind diese Magnetringe besonders durch Temperatur und Strahlung beansprucht und stellen ein Ausfallrisiko dar. Zusätzlich ist die Magnetisierung dieser Ringe nicht beliebig wählbar sondern ist an bestimmte geometrische Bedingungen geknüpft.

Aufgabe der vorliegenden Erfindung ist es, ein flexibles und zuverlässiges Sensorsystem, insbesondere zur Bestimmung der absoluten Position zu schaffen.

US 2014/0028294 A1 und DE 10 060 287 A1 beschreiben Noniussysteme zur Bestimmung eines Drehwinkels eines drehbaren Körpers. Hierbei werden mehrere Maßkörper verwendet, an denen eine Vielzahl von alternierend angeordneten Permanentmagneten angeordnet sind. Zur Abtastung der sich ändernden Magnetsignale werden z.B. AMR-Sensoren verwendet.

Die Aufgabe wird gelöst durch einen Maßkörper nach Anspruch 1, ein Noniussystem nach Anspruch 9, ein Sensorsystem nach Anspruch 11 und einen Elektromotor nach Anspruch 15.

Erfindungsgemäß weist das Sensorsystem mindestens einen Maßkörper auf sowie einen Sensor zur Erfassung der Änderung des magnetischen Feldes, welches durch die Bewegung des Maßkörpers erzeugt wird. Selbstverständlich ist es hierbei auch möglich, den Maßkörper ortsfest anzuordnen und den Sensor zu bewegen. Auch hierbei erfasst der Sensor die Änderung des magnetischen Feldes. Vorzugsweise handelt es sich bei dem Maßkörper nicht um den Kommutator eines Elektromotors. Der Maßkörper kann jedoch mittelbar oder unmittelbar mit dem Kommutator eines Elektromotors verbunden sein.

Erfindungsgemäß weist der mindestens eine Maßkörper ein Trägerelement auf und in dem Trägerelement sind eine Vielzahl von Dauermagneten angeordnet. Aufgrund des vorgesehenen Trägerelements können Maßkörper mit bestimmten mechanischen Eigenschaften gebaut werden, in denen die gewünschte Zahl von Dauermagneten, vorzugsweise eingesteckt und verklebt sind. Somit sind insbesondere die Dauermagneten als separate Bauteile ausgebildet und nicht einstückig mit dem Trägerelement verbunden.

Erfindungsgemäß weist der Maßkörper eine ungerade Zahl von Dauermagneten auf. Da die Anzahl der Dauermagneten frei gewählt werden kann, ist es nicht mehr nötig, zwingend eine gerade Anzahl, insbesondere bei kreisförmig als Ferritring ausgebildeten Maßkörpern vorzusehen. Durch die Verwendung von Dauermagneten in einem Trägerelementen ist man insbesondere nicht mehr an bestimmte geometrische Bedingungen, wie beispielsweise eine gerade Anzahl von Polen, gebunden, so dass wie oben beschrieben auch eine ungerade Anzahl von Polen vorgesehen sein können.

Insbesondere sind die Dauermagnete im Trägerelement bezüglich ihrer Magnetisierungsrichtung gleich oder alternierend angeordnet. Durch das Vorsehen einzelner Dauermagnete ist es möglich, alle Dauermagneten bezüglich ihrer Magnetisierungsrichtung gleich anzuordnen im Gegensatz zur bisher üblichen alterierenden Anordnung. Die alternierende Anordnung ist selbstverständlich durch eine entsprechende alternierende Anordnung der Dauermagneten ebenfalls möglich. Die gleiche Anordnung der Dauermagneten bezüglich ihrer Magnetisierungsrichtung kann auch als unipolare Anordnung bezeichnet werden. Eine solche unipolare Anordnung der Dauermagneten ist auch mit einer geraden Anzahl von Dauermagneten möglich.

Erfindungsgemäß sind die Dauermagnete im Trägerelement bezüglich ihrer Magnetisierungsrichtung gleich angeordnet. Durch das Vorsehen einzelner Dauermagnete ist es möglich, alle Dauermagneten bezüglich ihrer Magnetisierungsrichtung gleich anzuordnen im Gegensatz zur bisher üblichen alterierenden Anordnung.

Der Träger ist insbesondere aus einem Stück fertigbar, also einstückig aufgebaut, was wiederum die Genauigkeit des Maßkörpers durch eine einfache Fertigung erhöht.

Vorzugsweise sind Bohrungen in dem Trägerelement vorgesehen, in denen die Dauermagnete zur Fixierung angeordnet sind. Durch eine präzise Fertigung der Bohrungen ist somit eine präzise Anordnung der Dauermagnete möglich. Vorzugsweise ist das Trägermaterial aus einem unmagnetischen, unmagnetisierbaren Material hergestellt. Besonders bevorzugt ist hierbei die Verwendung von Kunststoff oder Aluminium, wobei insbesondere Aluminium eine ausreichend hohe Festigkeit aufweist, so dass Verformungen des Maßkörpers nicht auftreten oder so klein sind, dass diese die Positionsbestimmung nicht beeinflussen.

Mit dieser Aufbauform kann eine erheblich genauere Anordnung der Magnetisierung gewährleistet sein.

Vorzugsweise sind die Vielzahl von Dauermagneten im Maßkörper symmetrisch angeordnet. Hierbei wird abgestellt auf die Magnetisierungsrichtung der Dauermagneten, als auch auf deren räumliche Anordnung. Eine symmetrische Anordnung bezüglich der Magnetisierung besteht beispielsweise, falls der Nordpol aller Dauermagneten in die gleiche Richtung weist ebenso wie der Südpol. Andere Symmetrien sind hierbei selbstverständlich denkbar und können abgestimmt werden auf die jeweilige Anwendung oder den verwendeten Sensor bzw. Elektromotor. Eine symmetrische Anordnung bezüglich der Position der Vielzahl von Dauermagneten liegt beispielsweise vor, falls die Dauermagneten äquidistant über das Trägerelement verteilt sind.

Insbesondere, falls das Trägerelement rund bzw. kreisförmig ausgebildet ist, zur Vermessung von Rotationsbewegungen sind die Vielzahl von Dauermagneten vorzugsweise radial bezüglich ihrer Magnetisierungsrichtung angeordnet. Eine radiale Anordnung der Vielzahl von Dauermagneten bezüglich ihrer Magnetisierung bedeutet hierbei, dass ein Pol eines Dauermagneten in Richtung der Drehachse weist, wohingegen der andere Pol des Dauermagneten von der Drehachse weg weist. Alternativ hierzu ist die Vielzahl von Dauermagneten insbesondere axial bezüglich ihrer Magnetisierungsrichtung angeordnet. Eine axiale Anordnung bedeutet hierbei, dass die Verbindungslinie von Nord- und Südpol eines Dauermagneten im Wesentlichen parallel zur Drehachse angeordnet ist. Hierdurch ist es möglich, einen Sensor zur Erfassung der Änderung des magnetischen Feldes seitlich neben dem Maßkörper anzuordnen, wodurch eine besonders kompakte Anordnung und ein kleinerer Aufbau des Sensorsystems erreicht werden kann.

Alternativ hierzu, falls der Maßkörper verwendet wird zur Vermessung von Translationsbewegungen, ist hierbei das Trägerelement länglich ausgebildet und die Vielzahl von Dauermagneten sind entlang des Trägerelements angeordnet. Durch die Translationsbewegung erfolgt ein Verfahren des Maßkörpers in die Translationsrichtung, wodurch durch die Vielzahl von Dauermagneten an einem bestimmten Ort und insbesondere dem Ort des Sensors ein sich änderndes magnetisches Feld erzeugt wird.

Darüber hinaus betrifft die Erfindung ein Noniussystem, insbesondere für einen Elektromotor mit einem ersten Maßkörper mit einer Vielzahl von darin angeordneten Dauermagneten und mindestens einem zweiten Maßkörper mit einer Vielzahl von darin angeordneten Dauermagneten. Dabei ist die Anzahl der Dauermagnete im ersten Maßkörper um eine ungerade Zahl größer als die Anzahl der Dauermagnete im Maßkörper. Besonders bevorzugt ist hierbei die Anzahl der Dauermagnete im ersten Maßkörper um genau eins größer als die Anzahl der Dauermagnete im zweiten Maßkörper. Dabei ist der erste Maßkörper relativ zum zweiten Maßkörper unbeweglich angeordnet. Hierdurch führt eine Bewegung des ersten Maßkörpers unweigerlich ebenfalls zu einer Bewegung des zweiten Maßkörpers.

Vorzugsweise ist mindestens ein, vorzugsweise beide Maßkörper des Noniussystems ausgebildet wie vorstehend beschreiben.

Insbesondere handelt es sich bei dem Sensor des Sensorsystems um einen magnetoresistiven Sensor und bevorzugt um eine Mehrzahl von magnetoresistiven Sensoren, welche in Form einer Brückenschaltung verbunden sind zur Erfassung der Änderung des magnetischen Felds durch die Bewegung des Maßkörpers.

Vorzugsweise ist die Stärke des Magnetfelds am Ort der Sensoren optimiert auf den verwendeten Sensor. Dies kann beispielsweise durch den Abstand zwischen dem Maßkörper und dem Sensor erfolgen oder durch die Wahl der verwendeten Dauermagneten.

Vorzugsweise weist das Sensorsystem ein Noniussystem auf, wie vorstehend beschrieben, wobei ein weiterer Sensor vorgesehen ist, zur Erfassung der Änderung des magnetischen Feldes durch die Bewegung des mindestens zweiten Maßkörpers. Ein solcher zweiter Maßkörper kann bei bestehenden Systemen auf einfache Weise nachgerüstet werden, um diese somit zu einem absoluten Messsystem zu ergänzen. Bei einem solchen absoluten System ist durch das Sensorsystem mit einem Noniussystem der Positionswert eindeutig ablesbar. Ein solches Noniussystem kann auch nachgerüstet werden durch Vorsehen eines zweiten Maßkörpers, bei Sensorsystemen, welche auf einem konventionellen Ferritring basieren.

Darüber hinaus betrifft die vorliegende Erfindung einen Elektromotor mit einem Stator, einem drehbaren Rotor und einem Sensorsystem wie vorstehend beschrieben, wobei der Maßkörper insbesondere mit dem Rotor positionsfest verbunden ist. Insbesondere, falls ein Noniussystem vorgesehen ist, sind die mindestens zwei Maßkörper positionsfest mit dem Rotor verbunden.

Vorzugsweise weist der Maßkörper des Sensorsystems eine Polzahl auf, die der Polzahl des Elektromotors entspricht.

Vorzugsweise handelt es sich bei dem Elektromotor um einen bürstenlosen Motor.

Nachfolgend wird die Erfindung anhand bevorzugter Ausführungsformen mit Bezugnahme auf die nachfolgenden Figuren genauer erläutert.

Es zeigen:
- Figur 1: eine erste Ausführungsform des Maßkörpers,
- Figur 2: eine zweite Ausführungsform des Maßkörpers,
- Figur 3: eine dritte Ausführungsform des Maßkörpers,
- Figur 4: eine vierte Ausführungsform des Maßkörpers,
- Figur 5: eine fünfte Ausführungsform des Maßkörpers zur Verwendung in einem Translationssensor und
- Figur 6: einen Elektromotor mit einem Sensorsystem, aufgebaut als Noniussystem,
- Figur 7: eine weitere Ausführungsform der Erfindung ausgebildet als Noniussystem,
- Figur 8: eine Seitenansicht des Noniussystems aus Figur 7.

Die Erfindung wird durch den unabhängigen Anspruch definiert.

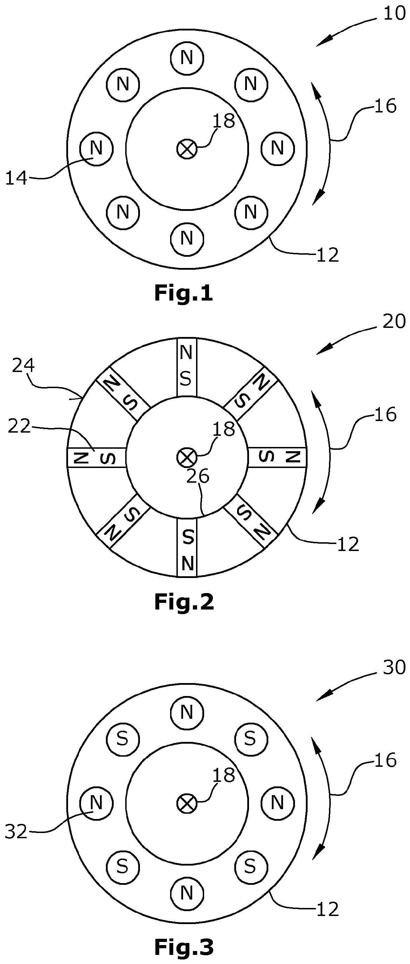

Figur 1 zeigt einen als Kreisring ausgeformten Maßkörper 10 mit einem Trägerelement 12, in welchem acht Dauermagnete 14 äquidistant entlang des Kreisrings angeordnet sind. Das Trägerelement 12 dreht sich dabei entsprechend dem Doppelpfeil 16 um die angedeutete Achse 18.

Die Magnete 14 sind dabei axial angeordnet und weisen allesamt eine gleiche Magnetisierungsrichtung auf. Somit sind auf der sichtbaren Vorderseite des Maßkörpers 10 die Nordpole der Dauermagneten 14 angeordnet, wohingegen auf der nicht sichtbaren Rückseite des Maßkörpers 10 entsprechend die Südpole der Dauermagneten 14 angeordnet sind. Selbstverständlich kann die Polarität der Dauermagnete auch umgekehrt sein oder in sonstiger sinnvoller Weise abweichen.

Im Nachfolgenden sind gleiche oder ähnliche Bauteile mit identischen Bezugszeichen gekennzeichnet.

In Figur 2 weist der als Kreisring ausgeformte Maßkörper 20 ebenfalls acht äquidistant angeordnete Dauermagnete 22 auf. Diese sind jedoch radial angeordnet, wobei auch hier die Dauermagnete gleich bezüglich ihrer Magnetisierungsrichtung angeordnet sind. Somit weist der Südpol aller Dauermagnete 22 in der Figur in Richtung der Drehachse 18, wohingegen der Nordpol der Dauermagnete 22 in die entgegengesetzte Richtung weist. Selbstverständlich kann die Polarität der Dauermagnete auch umgekehrt sein oder in sonstiger sinnvoller Weise abweichen. Ein möglicher Sensor zur Erfassung der Änderung des magnetischen Feldes durch die Bewegung des Maßkörpers 20 kann hierbei radial beabstandet vom Außenumfang 24 angeordnet sein, so dass durch den Sensor im vorliegenden Beispiel das Magnetfeld der Nordpole erfasst wird, oder alternativ hierzu kann der Sensor radial beabstandet vom Innenumfang 26 im Inneren des Maßkörpers angeordnet sein und somit im vorliegenden Beispiel das Magnetfeld der Südpole der Dauermagneten 22 erfassen.

Der Maßkörper 30, gezeigt in Figur 3, weist wiederum äquidistante axial angeordnete Dauermagnete 32 auf, wobei diese alternierend angeordnet sind, besonders in Umfangsrichtung an der sichtbaren Oberseite des Maßkörpers 30 auf einem Nordpol ein Südpol folgt und auf einen Südpol ein Nordpol.

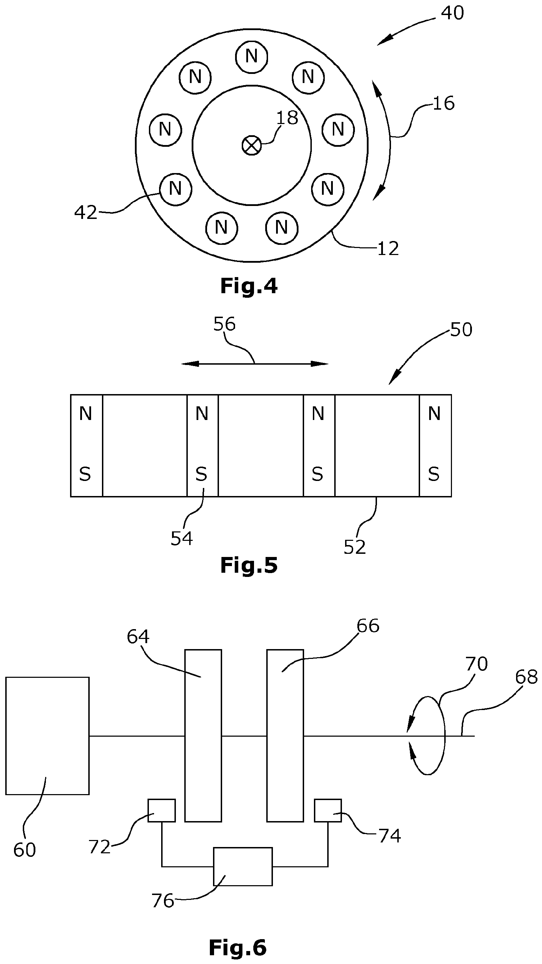

Durch das erfindungsgemäße Vorsehen separater Dauermagnete in einem Trägerelement 12 ist es möglich, wie gezeigt beim Maßkörper 40 in der Figur 4, eine ungerade Anzahl von Polen aufgrund einer ungeraden Anzahl von Dauermagneten vorzusehen. Der Maßkörper 40 weist hierbei exemplarisch neun Dauermagnete 42 auf, welche äquidistant in Umfangsrichtung im Trägerelement 12 angeordnet sind. Hierbei sind die Dauermagnete 42 in axialer Richtung angeordnet und bezüglich ihrer Magnetisierungsrichtung gleich angeordnet. Eine Anordnung einer ungeraden Anzahl Dauermagnete, wie vorstehend beschrieben und in den Figuren 2 und 3 gezeigt mit radial angeordneten Dauermagneten oder alternierend bezüglich ihrer Magnetisierungsrichtung angeordneten Dauermagneten bei einer ungeraden Anzahl an Dauermagneten ist ebenfalls möglich.

Der Maßkörper 50 weist ein längliches Trägerelement 52 auf, in welchem Dauermagneten 54 angeordnet sind. Der Maßkörper 50 wird beispielsweise verwendet in Sensorsystemen zur Erfassung einer Translationsbewegung und wird hierbei entsprechend der Pfeile 56 bewegt.

Bei dem Maßkörper 50 sind dabei die Dauermagnete 54 senkrecht zur Bewegungsrichtung angeordnet und bezüglich ihrer Magnetisierungsrichtung gleich angeordnet. Die Magnete 54 sind dabei ebenfalls äquidistant zu einander vorgesehen.

Die Erfindung betrifft darüber hinaus einen insbesondere bürstenlosen Elektromotor 60 mit einem Sensorsystem 62, mit einem ersten Maßkörper 64 und einem zweiten Maßkörper 66. Dabei ist der erste Maßkörper 64 ausgebildet, wie vorstehend beschrieben und weist eine gerade Anzahl axial ausgerichteter, gleichartig bezüglich ihrer Magnetisierungsrichtung angeordnete Dauermagnete auf. Der zweite Maßkörper 66 ist ausgebildet wie vorstehend beschrieben, weist jedoch eine ungerade Anzahl an Dauermagneten auf. Diese ungerade Anzahl von Dauermagneten ist ebenfalls axial ausgerichtet und gleich bezüglich der Magnetisierungsrichtung angeordnet. Sowohl der erste Maßkörper 64 als auch der zweite Maßkörper 66 ist über eine drehbare Achse 68 mit dem Rotor des Elektromotors 60 verbunden, so dass eine Drehung des Rotors des Elektromotors 60 zu einer Drehung des ersten Maßkörpers 64 sowie des zweiten Maßkörpers 66 entsprechend dem Pfeil 70 führt. Das mit den Elektromotor 60 verbundene Sensorsystem 62 weist darüber hinaus einen ersten Sensor 72 auf, welche das sich ändernde Magnetfeld des ersten Maßkörpers 64 erfasst. Darüber hinaus ist ein zweiter Sensor 74 vorgesehen, der das sich ändernde Magnetfeld des zweiten Maßkörpers 66 erfasst. Das erfasste Magnetfeld wird in einer Auswertevorrichtung 76 in eine absolute Position des Rotors des Elektromotors 60 ausgewertet.

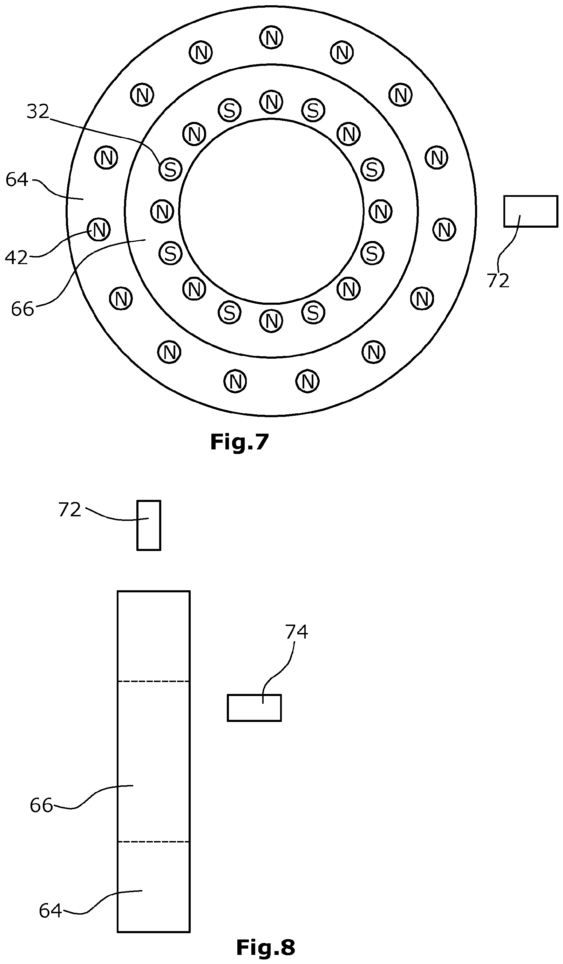

Erfindungsgemäß wird das Noniusprinzip verwendet. Dies ist in Figur 7 dargestellt. Diese Ausführungsform verwendet einen ersten Maßkörper 64, der vorzugsweise in radialer Richtung außen angeordnet ist, sowie einen mit diesem fest verbundenen zweiten Maßkörper 66 der vorzugsweise in radialer Richtung innerhalb des ersten Maßkörpers 64 angeordnet ist. Diese beiden Maßkörper können auch einstüückig ausgebildet sein. Der erste Maßkörper 64 weist eine ungerade Anzahl von Dauermagneten 42 auf, die unipolar angeordnet sind, d.h. deren Magnetisierungsrichtung identisch ist. Im dargestellten Ausführungsbeispiel sind 15 Dauermagneten vorgesehen.

Der innere Maßkörper 66 weist eine gerade Anzahl von Dauermagneten auf, deren Magnetisierungsrichtung alternierend ist. Dies bedeutet, dass zwei benachbarte Dauermagnete immer eine umgekehrte Magnetisierungsrichtung haben. Aus diesem Grund kann in diesem inneren Maßkörper lediglich eine gerade Anzahl von Dauermagneten vorgesehen sein. Diese unterscheidet sich bevorzugt um genau einen Dauermagneten von der Anzahl der Dauermagneten im ersten Maßkörper. Im dargestellten Ausführungsbeispiel weist der innere Maßkörper 66 sechzehn Dauermagneten auf. Hierdurch kann ein Noniussystem geschaffen werden. Hierbei ist in radialer Richtung außerhalb des ersten Maßlörpers 64 ein erster Sensor 72 vorgesehen, durch den das sich ändernde Magnetfeld des ersten Maßkörpers 64 erfasst wird. Hierdurch würden beispielsweise fünfzehn Sinus-/Cosinus-Perioden pro Umdrehung entstehen.

Wie der Figur 8 entnehmbar ist, ist ein zweiter Sensor 74 vorgesehen, durch den das sich ändernde Magnetfeld des zweiten Maßkörpers 66 erfasst wird. Dieser befindet sich in radialer Richtung auf Höhe der Dauermagneten 32 des zweiten Maßkörpers 66 und von diesen in axialer Richtung etwas beabstandet. Dieser Sensor würde im dargestellten Ausführungsbeispiel sechzehn Sinus-/Cosinus-Perioden pro Umdrehung erfassen. Durch die Tangensberechnung der Sinus-/Cosinus-Signale kann ein Positionssignal erzeugt werden, dass sechszehn bzw. fünfzehn Sägezähne aufweist. Bei einer gemeinsamen Betrachtung der beiden Sägezahnserien ergibt sich für jedes Wertepaar ein eindeutiger absoluter Positionswert. Durch das beschriebene Noniussystem ist somit eine absolute Positionsbestimmung möglich. Bei Betrachtung einer einzelnen Magnetspur dagegen ist immer nur eine relative Positionsmessung möglich, da keine Aussage darüber getroffen werden kann, in welcher der sechszehn Perioden man sich gerade befindet. Das beschriebene Noniussystem wird dadurch ermöglich, dass durch die unipolare Ausrichtung der Magneten 42 im ersten Maßkörper 64 die Verwendung einer ungeraden Anzahl von Magnetpolen ermöglicht wird, so dass der Aufbau eines Noniussystems möglich ist.

## Patentansprüche

1. Rotationssymmetrisches Noniussystem mit einem ersten Maßkörper (64), wobei der erste Maßkörper (64) ein erstes Trägerelement aufweist und
einer im ersten Trägerelement angeordneten Vielzahl von Dauermagneten (42),
wobei im ersten Maßkörper (64) eine ungerade Zahl von Dauermagneten (42) vorgesehen ist und die Dauermagnete (42) gleich bezüglich ihrer Magnetisierungsrichtung angeordnet sind,
wobei das Sensorsystem ferner einen Sensor (72) zur Erfassung der Änderung des magnetischen Feldes durch die Bewegung des Maßkörpers (64) aufweist,
wobei das rotationssymmetrische Noniussystem ferner aufweist:
einen zweiten Maßkörper (66) mit einer geraden Anzahl von Dauermagneten (32), deren Magnetisierungsrichtung alternierend ist, einem zweiten Sensor, durch den das sich ändernde Magnetfeld des zweiten Maßkörpers (66) erfasst wird,
wobei die Magnetisierungsrichtung der Dauermagnete im ersten und zweiten Maßkörper (64, 66) in axialer Richtung, d.h. parallel zur Rotationsachse des Noniussystems oder in radialer Richtung verläuft.

2. Rotationssymmetrisches Noniussystem nach Anspruch 1, **dadurch gekennzeichnet, dass** das Trägerelement (12) rund ist zur Vermessung von Rotationsbewegungen.

3. Rotationssymmetrisches Noniussystem nach einem der Ansprüche 1 bis 2, **dadurch gekennzeichnet, dass** das Trägerelement (12, 52) aus einem unmagnetischen, unmagnetisierbaren Material besteht, insbesondere einem Kunststoff oder Aluminium.

4. Rotationssymmetrisches Noniussystem nach einem der Ansprüche 1 bis 3, **dadurch gekennzeichnet, dass** die Dauermagnete (14, 22, 32, 42, 54) in Bohrungen im Trägerelement (12, 52) insbesondere durch Verkleben fixiert sind.

5. Rotationssymmetrisches Noniussystem nach nach einem der Ansprüche 1 bis 4, **dadurch gekennzeichnet, dass** es sich bei dem Sensor (72, 74) um einen magnetoresistiven Sensor handelt.

6. Elektromotor mit einem Stator, einem drehbaren Rotor und einem rotationssymmetrischen Noniussystem (62) nach einem der Ansprüche 1 bis 5, wobei die Maßkörper (64, 66) mit dem Rotor positionsfest verbunden sind.

## Claims

1. A rotationally symmetric nonius system comprising a first measuring body (64), wherein the first measuring body (64) comprises a first carrier element and a plurality of permanent magnets (42) arranged in the first carrier element,
wherein in the first measuring body (64) an uneven number of permanent magnets (42) is provided and the permanent magnets (42) are arranged in the same manner in terms of their direction of magnetization,
wherein the sensor system further comprises a sensor (72) for sensing the change of the magnetic field by moving the measuring body (64),
wherein the rotationally symmetric nonius system further comprises:
a second measuring body (66) having an even number of permanent magnets (32) whose direction of magnetization is alternating,
a second sensor by means of which the changing magnetic field of the second measuring body (66) is sensed,
wherein the direction of magnetization of the permanent magnets in the first and the second measuring body (64, 66) extends in an axial direction, i.e. in parallel to the rotation axis of the nonius system, or in a radial direction.

2. The rotationally symmetric nonius system according to claim 1, **characterized in that** the carrier element (12) is round for measuring rotational movements.

3. The rotationally symmetric nonius system according to any one of claims 1 to 2, **characterized in that** the carrier element (12, 52) is made from a non-magnetized, non-magnetizable material, in particular a plastic material or aluminum.

4. The rotationally symmetric nonius system according to any one of claims 1 to 3, **characterized in that** the permanent magnets (14, 22, 32, 42, 54) are fixed in bore holes in the carrier element (12, 52), in particular by gluing.

5. The rotationally symmetric nonius system according to any one of claims 1 to 4, **characterized in that** the sensor (72, 74) is a magneto-resistive sensor.

6. An electric motor comprising a stator, a rotatable rotor and a rotationally symmetric nonius sensor (62) according to any one of claims 1 to 5, wherein the measuring bodies (64, 66) are connected to the rotor in a positionally fixed manner.

## Revendications

1. Système de vernier à symétrie de révolution doté d'un premier corps de mesure (64),
dans lequel le premier corps de mesure (64) comporte un premier élément porteur et une pluralité d'aimants permanents (42) disposés dans le premier élément porteur,
dans lequel un nombre impair d'aimants permanents (42) est prévu dans le premier corps de mesure (64) et les aimants permanents (42) sont disposés à l'identique par rapport à leur direction de magnétisation,
dans lequel le système de capteur comporte en outre un capteur (72) destiné à saisir la variation du champ magnétique due au mouvement du corps de mesure (64),
dans lequel le système de vernier à symétrie de révolution comporte en outre :
un deuxième corps de mesure (66) doté d'un nombre pair d'aimants permanents (32), dont les directions de magnétisation sont alternées, d'un deuxième capteur, par le biais duquel est saisi le champ magnétique variable du deuxième corps de mesure (66),
dans lequel la direction de magnétisation des aimants permanents dans le premier et le deuxième corps de mesure (64, 66) s'étend dans la direction axiale, c'est-à-dire parallèlement à l'axe de rotation du système de vernier, ou dans la direction radiale.

2. Système de vernier à symétrie de révolution selon la revendication 1, **caractérisé en ce que** l'élément porteur (12) est rond afin de mesurer des mouvements de rotation.

3. Système de vernier à symétrie de révolution selon l'une des revendications 1 à 2, **caractérisé en ce que** l'élément porteur (12, 52) est constitué d'un matériau non-magnétique, non-magnétisable, en particulier d'un plastique ou d'aluminium.

4. Système de vernier à symétrie de révolution selon l'une des revendications 1 à 3, **caractérisé en ce que** les aimants permanents (14, 22, 32, 42, 54) sont fixées dans des perforations de l'élément porteur (12, 52), en particulier par collage.

5. Système de vernier à symétrie de révolution selon l'une des revendications 1 à 4, **caractérisé en ce que** pour ce qui concerne le capteur (72, 74), il s'agit d'un capteur magnétorésistif.

6. Moteur électrique doté d'un stator, d'un rotor tournant et d'un système de vernier à symétrie de révolution (62) selon l'une des revendications 1 à 5, dans lequel les corps de mesure (64, 66) sont reliés au rotor de manière fixe en position.
